# EUROPÄISCHE PATENTSCHRIFT

(11) **EP 3 603 789 B1**
(45) Veröffentlichungstag und Bekanntmachung des Hinweises auf die Patenterteilung: **19.05.2021**
(21) Anmeldenummer: 19186439.6
(22) Anmeldetag: 16.07.2019
(51) Int. Cl.: B01J 3/04, B01J 3/02

(54) **DRUCKBEHÄLTER MIT SPÜLVORRICHTUNG**
PRESSURIZED CONTAINER WITH RINSING DEVICE
RÉSERVOIR SOUS PRESSION POURVU DE DISPOSITIF DE RINÇAGE

(30) Priorität: 02.08.2018 DE 202018104456 U
(43) Veröffentlichungstag der Anmeldung: 05.02.2020
(73) Patentinhaber: MWT AG, 9435 Heerbrugg (CH)
(72) Erfinder: Lautenschläger, Werner, 9435 Heerbrugg (CH); Lautenschläger, Jens, 9435 Heerbrugg (CH); Scholze, Werner, 88316 Isny (DE)
(74) Vertreter: Kiwit, Benedikt

(56) Entgegenhaltungen:
- EP-A1- 2 596 861
- EP-A2- 2 638 965
- DE-A1-102008 001 710

## Beschreibung

Die Erfindung betrifft einen Druckbehälter aufweisend eine Reaktionskammer als Druckraum zum Auslösen und/oder Fördern chemischer und/oder physikalischer Druckreaktionen von in der Reaktionskammer aufgenommenen Proben.

Es ist bekannt, vor dem Start einer Reaktion - insbesondere bei der Synthese oder Extraktion - die Reaktionskammer eines Druckbehälters mit einem insbesondere inerten oder reduktiven Gas zu spülen, um eine Zerstörung bzw. Zersetzung oder chemische Veränderung der zu untersuchenden Proben zu vermeiden. Eine solche Veränderung wird in der Regel verursacht, da Sauerstoff in der Reaktionskammer anwesend ist, wobei insbesondere hohe Temperaturen und/oder Drücke diese Veränderung zudem beschleunigen. Die Spülung der Reaktionskammer soll also bewirken, dass der Sauerstoff aus der Reaktionskammer entweicht, sodass keine Veränderung der zu untersuchenden Proben eintritt. Dies ist insbesondere deshalb wichtig, da veränderte Proben die Analyse bzw. die Analyseergebnisse verfälschen 2- In EP-A-2 638 965 wird ein Druckbehälter für chemische Synthese offenbart.

Es hat sich nunmehr im Stand der Technik gezeigt, dass bei der Spülung zwar Sauerstoff aus der Reaktionskammer entweicht, jedoch ein Restbestand an Sauerstoff in der Reaktionskammer verbleibt. Mithin besteht der Bedarf auch diesen Restbestand aus der Reaktionskammer zu entfernen oder wenigstens zu verringern, um die Spülung insgesamt effizienter zu machen.

Es ist somit eine Aufgabe der Erfindung, einen Druckbehälter der eingangs genannten Art bereitzustellen, welcher die Reaktionskammer effizienter spült.

Die Aufgabe wird erfindungsgemäß durch die Merkmale der unabhängigen Ansprüche gelöst. Vorteilhafte Weiterbildungen sind Gegenstand der hierauf rückbezogenen Unteransprüche.

Ein erfindungsgemäßer Druckbehälter weist auf: eine Reaktionskammer als Druckraum zum Auslösen und/oder Fördern chemischer und/oder physikalischer Druckreaktionen von in der Reaktionskammer aufgenommenen Proben; einen Fluid-Einlass mit einem Zuführventil, welches zwischen einer Offenstellung zum Zuführen eines Fluids, vorzugsweise eines Spülgases, in die Reaktionskammer und einer Schließstellung zum Stoppen des Zuführens des Fluids verstellbar ist; einen Fluid-Auslass mit einem Abführventil, welches zwischen einer Offenstellung zum Abführen eines Fluids aus der Reaktionskammer und einer Schließstellung zum Stoppen des Abführens des Fluids aus der Reaktionskammer verstellbar ist; und einen Sauerstoffsensor zum Erfassen eines Sauerstoffgehalts in der Reaktionskammer. Der Druckbehälter weist ferner eine Steuerungseinrichtung auf, welche eingerichtet ist, das Zuführventil und das Abführventil auf Basis des von dem Sauerstoffsensor erfassten Sauerstoffgehalts derart zu steuern, dass über das in der Offenstellung befindliche Zuführ- und Abführventil die Reaktionskammer gespült wird und wenigstens das Abführventil von der Offenstellung in die Schließstellung wechselt, sobald ein vorbestimmter Sauerstoffgehalt unterschritten wird.

Mit anderen Worten wird mittels der automatisch betätigten Ventile und des Sauerstoffsensors der Sauerstoffgehalt in der Reaktionskammer derart regelt, dass solange Sauerstoff aus der Reaktionskammer über das Abführventil mit Hilfe des über das Zuführventil zugeführte Fluids entweicht, bis die Reaktionskammer einen vorbestimmten Sauerstoffgehalt unterschreitet. Dies erfolgt vorzugsweise solange, bis das gewünschte Niveau an Sauerstoff in der Reaktionskammer erreicht ist, sodass die Spüleffizienz gesteigert ist. Die in der Reaktionskammer aufgenommenen Proben sind folglich weniger Sauerstoff ausgesetzt, sodass keine Veränderung der zu untersuchenden Proben einsetzt und die Analyse der Proben somit insgesamt verbessert ist.

Vorzugsweise ist die Steuerungseinrichtung eingerichtet, das Zuführventil derart zu steuern, dass nach dem Wechsel des Abführventils in die Schließstellung das Zuführventil in der Offenstellung bleibt, sodass die Reaktionskammer mittels des über das Zuführventil zugeführte Fluids unter Druck gesetzt wird. Somit kann das der Reaktionskammer über das Zuführventil zugeführte Fluid auf die Proben und vorzugsweise das Lösemittel der Proben wirken, um beispielsweise deren Siedepunkte zu erhöhen.

Der Druckbehälter kann ferner ein Rückschlagventil aufweisen, welches eingerichtet ist, die Zufuhr des Fluids über das Zuführventil in die Reaktionskammer zu stoppen, sobald ein bestimmter Druck in der Reaktionskammer erreicht ist. Somit kann sichergestellt werden, dass eine bestimmte Menge des Fluids der Reaktionskammer zugeführt wird bzw. eine vordefinierte Menge an in der Reaktionskammer vorgesehenen Fluid nicht überschritten wird.

Das Zuführventil und das Abführventil sind vorzugsweise oberhalb der im Druckbehälter aufgenommenen Probe vorgesehen. Somit kann die Reaktionskammer mittels des Fluids einerseits gut gespült werden, und andererseits erreicht das Fluid somit gut die Probe, um mit dieser beispielsweise wie in vorgenannter Weise wechselzuwirken. Außerdem sind die Ventile somit gut zugänglich.

Der Druckbehälter kann ferner eine mit dem Zuführventil und dem Fluid-Einlass verbundene Zuführleitung zum Zuführen des Spülgases in die Reaktionskammer aufweisen. Die Zuführleitung kann beispielsweise an ein das Fluid aufweisende Reservoir angeschlossen werden. Bevorzugt ist, wenn die Zuführleitung von außerhalb des Druckbehälters in den Fluid-Einlass mündet.

Vorzugsweise weist der Druckbehälter ferner eine mit dem Fluid-Auslass und dem Abführventil verbundene Abführleitung zum Abführen des Sauerstoffs aus der Reaktionskammer. Der Fluid-Auslass kann somit in einfacher Weise mit der Umgebung des Druckbehälters in Fluidverbindung gebracht werden. Bevorzugt ist, wenn die Abführleitung von außerhalb des Druckbehälters in den Fluid-Auslass mündet.

Der Sauerstoffsensor zum Erfassen des Sauerstoffgehalts kann stromabwärts von dem Abführventil mit der Abführleitung verbunden ist. Der Sauerstoffsensor kann somit einfach von außerhalb des Druckbehälters in Fluidverbindung mit der Reaktionskammer gebracht werden, was folglich einer einfachen Montage und Austauschbarkeit des Sauerstoffsensors zugutekommt.

Vorteilhafterweise ist das Abführventil ein Hochdruckventil. Somit kann der Sauerstoff mit hohem Druck und folglich insbesondere schnell aus der Reaktionskammer entweichen.

Das Fluid kann ein reduktives Gas sein. Somit kann eine Veränderung der Proben wegen Sauerstoffkontakts besonders effektiv vermieden werden. Auch ein Inertgas und/oder ein Fluid, das Argon und/oder Wasserstoff aufweist, eignet sich, um eine Veränderung der Proben effektiv zu vermeiden. Diese wirken reduzierend auf die insbesondere empfindlichen Proben und können diese somit vollständig erhalten bzw. rufen keine Abbaureaktion hervor. Besonders bevorzugt ist, wenn das Fluid 5 Vol. % Wasserstoff aufweist.

Vorzugsweise weist der Druckbehälter ferner ein Druckluftventil zum Anheben wenigstens der Reaktionskammer bezüglich des Druckbehälters mittels über das Druckluftventil in den Druckbehälter zugeführte Druckluft auf. Die Steuerungseinrichtung ist dazu eingerichtet, das Druckluftventil zum Anheben der Reaktionskammer auf Basis eines von der Steuerungseinrichtung (automatisch) erfassten Betriebsparameters, beispielsweise das Reaktionsende, automatisch zu betätigen. Somit wird insbesondere die Bedienbarkeit des Druckbehälters vereinfacht. Außerdem kann somit ohne zeitliche Verzögerung, also unmittelbar nach Erfassen des Betriebsparameters, die Reaktionskammer angehoben werden, um beispielsweise die darin befindlichen Proben zu entnehmen und/oder um den Druckbehälter zu warten oder zu pflegen. Dies kommt somit insbesondere der Effizienz der Handhabung des Druckbehälters zugute.

Ferner betrifft die Erfindung ein Verfahren zum Spülen einer Reaktionskammer mit einem wie zuvor beschriebenen Druckbehälter. Das Verfahren weist die folgenden Schritte auf: Spülen der Reaktionskammer über den Fluid-Einlass und den Fluid-Auslass sowie das offene Zuführ- und Abführventil mittels eines Fluids; Erfassen des Sauerstoffgehalts in der Reaktionskammer mit dem Sauerstoffsensor; Schließen wenigstens des Abführventils, sobald der erfasste Sauerstoffgehalt einen vorbestimmten Sauerstoffgehalt unterschreitet. Die zuvor genannten Vorteile des erfindungsgemäßen Druckbehälter gelten für das Verfahren analog. Das heißt, das Verfahren bewirkt insbesondere eine gesteigerte Spüleffizienz.

Nachfolgend wird die Erfindung anhand der Figuren, in denen vorteilhafte Ausführungsbeispiele der Erfindung dargestellt sind, beispielhaft beschrieben. In den Zeichnungen zeigen:
- Figur 1: eine schematische Schnittansicht eines Ausführungsbeispiels des erfindungsgemäßen Druckbehälters;
- Figur 2: eine schematische Schnittansicht einer Ausführungsform der Probenhalterung;
- Figur 3: Verfahrensschritte eines bevorzugten erfindungsgemäßen Verfahrens;
- Figur 4: bevorzugte, an die in Figur 3 dargestellten Verfahrensschritte anschließende Verfahrensschritte;
- Figur 5: bevorzugte, an die in Figur 4 dargestellten Verfahrensschritte anschließende Verfahrensschritte.

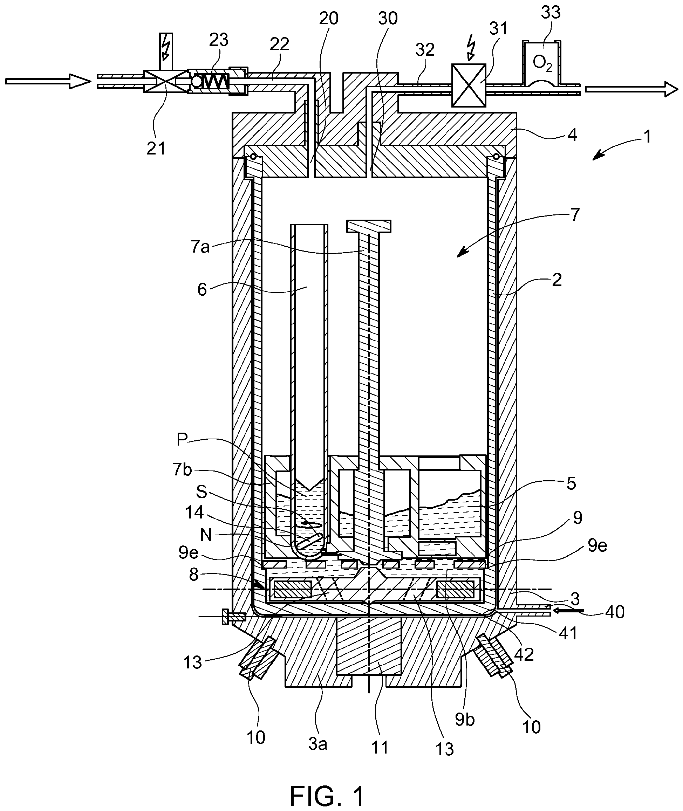

Figur 1 zeigt eine beispielhafte Ausführungsform eines erfindungsgemäßen Druckbehälters 1 zur Aufnahme von zu beheizenden Proben P zum Auslösen und/oder Fördern chemischer und/oder physikalischer Druckreaktionen an den Proben P. Die Probe P kann beispielsweise Feststoffe wie Sand, Boden, Erde und/oder Blätter aufweisen. Der Druckbehälter 1 ist jedoch nicht auf eine bestimmte Probe P beschränkt. Insbesondere können im Druckbehälter 1 jede Art von Proben einer Druckreaktion und Beheizung unterzogen werden, vor allem Proben mit hoher Viskosität bzw. vielen Feststoffanteilen.

Der Druckbehälter 1 kann ein (Hochdruck-)Autoklav sein. Der Druckbehälter 1 besteht vorzugsweise aus einem hochdruckfesten Werkstoff wie beispielsweise Metall, vorzugsweise Stahl, besonders vorzugsweise eine korrosionsbeständige Edelstahl-Legierung. Der Druckbehälter 1 ist dabei vorzugsweise derart ausgebildet, dass er bei Drücken bis zu wenigstens 200 Bar, vorzugsweise bis zu wenigstens 500 Bar, sowie bei Temperaturen von bis zu und auch über 300°C einsetzbar ist.

Der Druckbehälter 1 weist ferner eine Reaktionskammer bzw. einen Druckraum 2 zum Auslösen und/oder Fördern der chemischen und/oder physikalischen Druckreaktionen an den Proben P auf. Erkennbar ist, dass der Druckbehälter 1 die Reaktionskammer 2 umgibt, und zwar vorzugsweise an allen Seiten. Die Probe bzw. Proben P ist zur Probenbehandlung in der Reaktionskammer 2 angeordnet und aus dieser vorzugsweise durch eine Öffnung entnehmbar.

Der Druckbehälter 1 weist vorzugsweise ein (topfförmiges) Unterteil 3 und ein Deckelteil 4 auf, die miteinander verschließbar sind und im geschlossenen Zustand die Reaktionskammer 2 allseitig umgeben. Dabei verschließt der Deckel 4 die in dem Druckbehälter 1, also dem Unterteil 3 des Druckbehälters 1, vorgesehene Öffnung zum Einbringen und Entnehmen der Probe P. Mittels des Deckels 4 kann der Druckbehälter 1 und/oder die Reaktionskammer 2 folglich geöffnet und geschlossen werden.

Wie insbesondere die Figur 1 erkennen lässt, ist die Reaktionskammer 2 ferner ausgebildet, eine Flüssigkeit bzw. Grundlast 5 aufzunehmen. Die Flüssigkeit 5 ist vorzugsweise Wasser, kann aber auch jegliche andere stark mikrowellenabsorbierende Flüssigkeit sein oder aufweisen. Die Flüssigkeit 5 ist dabei insbesondere vorgesehen, um die in dem Druckbehälter 1 bzw. in der Reaktionskammer 2 befindliche Probe P zu beheizen bzw. zu erwärmen. Dies kann beispielsweise erfolgen, indem die Probe P von der Flüssigkeit 5 wenigstens teilweise umgeben ist, und ein nicht näher dargestellter Mikrowellengenerator die Flüssigkeit 5 durch Mikrowellenabsorption erwärmt.

Die Probe P kann in einem Probenbehälter 6 wie beispielsweise einem Reagenzglas vorgesehen sein. Die Probe P ist in dem Druckbehälter vorzugsweise derart vorgesehen, dass die Flüssigkeit 5 wenigstens bis zu einem Teil der Höhe der Probe P reicht. Es kann jedoch auch vorgesehen sein, dass die Flüssigkeit 5 über die Höhe der Probe P reicht. Vorzugsweise ist der Druckbehälter 1 bzw. die Reaktionskammer 2 ausgebildet zwei oder mehr Proben P aufzunehmen. In entsprechender Weise können auch mehrere Probenbehälter 6 vorgesehen sein, also wenigstens ein Probenbehälter 6, um jeweils eine Probe P aufzunehmen.

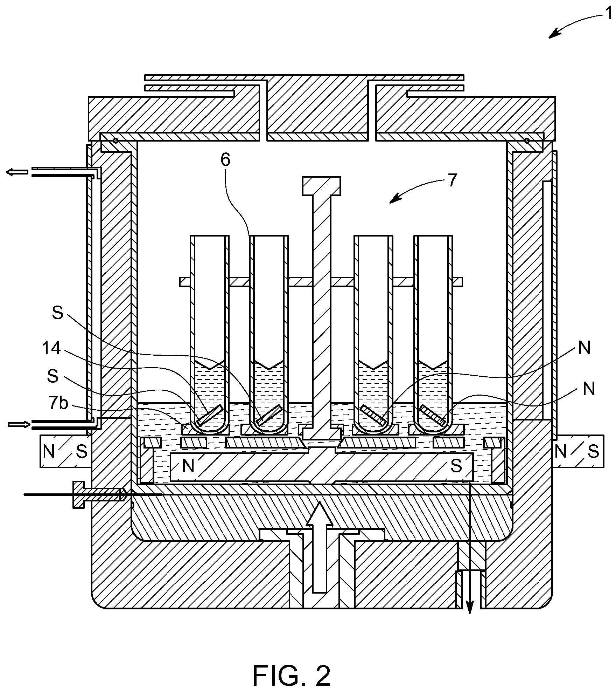

Der Druckbehälter 1 kann ferner eine Probenhalterung 7 aufweisen, mit welcher der Probenbehälter 6 in der Reaktionskammer 2 gehalten werden kann. Die Probenhalterung 7 trägt den wenigstens einen Probenbehälter 6 vorzugsweise derart trägt, dass der Probenbehälter 6 sich in der Flüssigkeit 5 befindet. Die Probenhalterung 7 ist insbesondere dazu ausgebildet, um beispielsweise über einen Griff 7a die wenigstens eine Probe P bzw. den wenigstens einen Probebehälter 6 in die Reaktionskammer 2 zu geben und aus dieser wieder zu entnehmen. Die Probenhalterung 7 kann ferner einen Probenbehälteraufnahmebereich 7b aufweisen, welcher vorzugsweise korrespondierend zu dem Probenbehälter 6 ausgebildet ist. Der Probenbehälteraufnahmebereich 7b kann mehrere Bereiche aufweisen, um mit einem jeweiligen Bereich einen Probenbehälter 6 aufzunehmen. Der Probenbehälteraufnahmebereich 7b bewirkt dabei insbesondere, dass die Probenbehälter 6 in einem bestimmten Muster vorgesehen sind, also beispielsweise in Kreisform um den Griff 7a herum angeordnet sind. Wie in Figur 1 erkennbar, können die Probenbehälter beispielsweise auf einem einzigen Kreis um den Griff 7a herum angeordnet sein. Wie in Figur 2 erkennbar, kann die Probenhalterung 7 mehrere Probenbehälter 6 auch auf unterschiedlichen Radien bzw. Kreisen um den Griff 7a herum aufnehmen. Der Probenbehälteraufnahmebereich 7b kann insbesondere korrespondierend zur Innenwand der Reaktionskammer 2 ausgebildet sein, um somit die Probenhalterung 7 in der Reaktionskammer 2 definiert zu halten.

Der Druckbehälter 1 kann ferner eine um eine Rotationsachse drehbar in der Reaktionskammer 2 gelagerte Magnetscheibe 8 aufweisen. Die Magnetscheibe 8 weist eine für eine Scheibe typische Form auf, also insbesondere eine flache und/oder (kreis-)runde Form. Die Magnetscheibe 8 ist in der Reaktionskammer 2 vorzugsweise derart vorgesehen, dass - wenn die Flüssigkeit 5 in der Reaktionskammer 2 vorhanden ist -die Magnetscheibe 8 in der Flüssigkeit 5 vorgesehen ist. Insbesondere kann die Magnetscheibe 8 in einem unteren Bereich der Reaktionskammer 2, vorzugsweise auf dem Boden der Reaktionskammer 2, vorgesehen sein. Vorzugsweise erstreckt sich die Magnetscheibe 8 im Wesentlichen über die gesamte Bodenfläche der Reaktionskammer 2 und lässt somit nur einen kleinen Spalt zwischen Magnetscheibe 8 und Reaktionskammer 2.

Der Druckbehälter 1 kann ferner eine Platte oder ein Podest 9 aufweisen, welche in der Reaktionskammer 2 vorgesehen und für die Flüssigkeit 5 durchlässig ist. Erkennbar ist, dass die Platte 9 mit der Reaktionskammer 2, insbesondere mit dem Boden der Reaktionskammer 2, einen Raum definiert, in welchem die Magnetscheibe 8 gelagert sein kann. Die Platte 9 kann hierfür beispielsweise in der Reaktionskammer 2 eingelegt sein und/oder mit den Seitenwänden der Reaktionskammer 2 verbunden sein (beispielsweise über eine Kante oder einen Vorsprung 9e, vgl. Figur 1). Alternativ kann die Platte 9 über sich von der Platte 9 weg erstreckende Seitenwände mit dem Boden der Reaktionskammer 2 verbunden sein.

Die in der Flüssigkeit 5 vorgesehene Platte 9 ist für die Flüssigkeit 5 durchlässig, beispielsweise über Löcher oder Durchgriffsöffnungen 9b. Die Löcher 9b sind vorzugsweise über die Oberfläche der Platte 9 gleichmäßig verteilt angeordnet. Bevorzugt ist, wenn die Platte 9 aus einem keramischen Material wie beispielsweise Siliciumcarbid hergestellt ist. Da diese Materialen stark mikrowellenabsorbierend sind, kann somit die in der Flüssigkeit 5 vorgesehene Platte 9 mittels Mikrowellenstrahlung erhitzt werden, sodass die Flüssigkeit 5 sich sowohl direkt über Mikrowellenabsorption als auch indirekt über Wärmeabgabe von der Platte 9 erhitzt.

Die Probenhalterung 7 ist vorzugsweise auf der Platte 9 gelagert. Die Probenhalterung 7 ist vorzugsweise ausgebildet, um beispielsweise über einen entsprechend ausgestalteten Lagerbereich die Probenhalterung in der Rektionskammer 2 in einer definierten Position und vorzugsweise unbewegbar zu lagern.

Der Druckbehälter 1 kann ferner wenigstens einen außerhalb der Reaktionskammer 2 vorgesehenen Elektromagneten 10 auf. Vorzugsweise weist der Druckbehälter 1 mehrere Elektromagneten 10 aufweisen, welche um die vorgenannte Rotationsachse bzw. um den Umfang der Reaktionskammer 2 gleichmäßig verteilt sind. Mittels des wenigstens einen Elektromagneten 10 wird ein sich (in einem Kreis) rotierendes Magnetfeld zum rotatorischen Antrieb der Magnetscheibe 8 um ihre Rotationsachse gebildet. Hierfür ist der wenigstens eine Elektromagnet 10 vorzugsweise entsprechend einem Stator eines Synchron- oder Schrittmotors ausgebildet. Zur Erzeugung des sich rotierenden Magnetfelds kann der Druckbehälter 1 eine nicht näher dargestellte Steuereinheit aufweisen, welche mit dem wenigstens einen Elektromagneten 10 funktional verbunden ist. Die Steuereinheit steuert die Elektromagneten 10 vorzugsweise in einer Weise, wie sie bei Synchronmotoren oder Schrittmotoren bekannt ist, also beispielsweise sinusförmig. Die Steuereinheit kann insbesondere eingerichtet sein, einen in die Elektromagneten 10 gespeisten Wechselstrom zu steuern, also insbesondere die Frequenz des Wechselstroms einzustellen. Über Einstellung der Frequenz des Wechselstroms kann somit die Drehzahl des Magnetfelds und folglich die Drehzahl der Magnetscheibe verändert/variiert werden.

Der Elektromagnet 10 ist vorzugsweise eine Magnet- oder Feldspule und/oder als Feldspulenring ausgebildet. Der Elektromagnet 10 kann jedoch auch jegliches andere Element zur Erzeugung eines Magnetfeldes bzw. eines sich rotierenden Magnetfeldes sein. Vorzugsweise ist der Elektromagnet 10 aus einem ferromagnetischen Material hergestellt. Vorzugsweise ist der Elektromagnet 10 fest oder wiederverbindbar mit der Außenwand des Druckbehälter 1 verbunden. Wie in Figur 1 erkennbar, ist der Elektromagnet 10 vorzugsweise unterhalb der Magnetscheibe 8 vorgesehen. Hierfür kann insbesondere vorgesehen sein, dass der Elektromagnet 10 im Gehäuseunterteil 3, vorzugsweise im Druckbehälterboden 3a, vorgesehen ist. Erkennbar ist insbesondere, dass der Elektromagnet 10 neben der (druckfesten) Mikrowelleneinkopplung 11 vorgesehen sein kann. Durch Vorsehen des Elektromagneten 10 unterhalb der Magnetscheibe 8 wird insbesondere bezweckt, dass der Elektromagnet 10 von unterhalb des Druckbehälters 1 gut zugänglich ist, um beispielsweise den Elektromagneten 10 einfach zu montieren.

Da die Magnetscheibe 8 sich in dem durch den Elektromagneten 10 bewirkten rotierenden Magnetfeld befindet, wird sich eine Drehzahl der Magnetscheibe 8 einstellen, welche der Drehzahl des durch den Elektromagneten 10 bewirkten Magnetfeldes entspricht. Die Magnetscheibe 8 ist hinsichtlich der Magnetisierung vorzugsweise entsprechend einem Rotor eines Synchron- oder Schrittmotors ausgebildet. Zur Magnetisierung der Magnetscheibe 8 kann die Magnetscheibe 8 einen Permanentmagneten und/oder einen fremderregten Magneten - also einen Magnet, der mit Stromzufuhr betrieben wird - aufweisen.

Alternativ zu dem Elektromagneten 10 kann der Druckbehälter 1 auch eine andere Magnetanordnung aufweisen, beispielsweise einen drehbar vorgesehenen, vorzugsweise außerhalb des Druckbehälters 1 angeordnete Permanentmagneten, sodass durch die Drehung des Permanentmagneten das sich rotierende Magnetfeld zum rotatorischen Antrieb der Magnetscheibe erzeugt wird. Die obigen Ausführungen bzgl. des Elektromagneten 10 gelten für eine solche Magnetanordnung analog.

Ferner ist erkennbar, dass die Magnetscheibe 8 wenigstens eine sich quer zur Rotationsachse der Magnetscheibe 8 erstreckende Durchgangsbohrung 13 aufweisen kann. Die Durchgangsbohrung 13 ist vorzugsweise derart vorgesehen, dass diese die Magnetscheibe 8 in eine Richtung nach oben und von der Rotationsachse der Magnetscheibe 8 weg durchläuft. Die Durchgangsbohrung 13 kann die Magnetscheibe 8 also in eine Richtung radial zur Drehrichtung der Rotationsachse durchlaufen. Alternativ oder zusätzlich kann die wenigstens eine Durchgangsbohrung 13 die Magnetscheibe in eine Richtung tangential zur Drehrichtung de Rotationsachse durchlaufen. Dies hat insbesondere den Vorteil, dass durch die Drehrichtungsänderung der Magnetscheibe 8 die Richtung des Durchflusses der Flüssigkeit durch die Durchgangsbohrung 13 geändert werden kann. Besonders bevorzugt ist, wenn die jeweilige Durchgangsbohrung 13 durchgängig gerade ausgebildet ist und ihre Längsachse quer zur Rotationsachse der Magnetscheibe 8 vorgesehen ist. Die jeweilige Durchgangsbohrung 8 ist also in einem Winkel zur Rotationsachse der Magnetscheibe 8 vorgesehen, welcher vorzugsweise in einem Bereich von 10 bis 80 Grad liegt und besonders bevorzugt 45 Grad +/- 5 bis 10 Grad beträgt.

Durch wie oben beschriebenes Vorsehen der Durchgangsbohrung 13 kann die in der Reaktionskammer 2 aufgenommene Flüssigkeit 5 durch Rotation der Magnetscheibe 8 durch die Durchgangsöffnung 13 getrieben werden, um die Flüssigkeit 5 zu rühren. Mittels des Rühreffekts wird die Flüssigkeit 5 in eine Richtung nach oben und außen gedrängt und steigt folglich an der Innenwandung der Reaktionskammer 2 auf. Folglich wird im Schnitt gesehen ein im Wesentlichen U-förmiger Flüssigkeitsspiegel gebildet. Die Flüssigkeit 5 wird also von einer Seite der Magnetscheibe 8, beispielsweise von deren Unterseite, zu einer anderen Seite der Magnetscheibe 8, beispielsweise zu deren Oberseite, getrieben, um somit die Flüssigkeit 5 für die Rührung zirkulieren zu lassen. Die Flüssigkeit 5 zirkuliert in der Reaktionskammer 2, indem sie durch den Spalt zwischen Magnetscheibe 8 und Platte 9, durch den Spalt zwischen Magnetscheibe 8 und Boden der Reaktionskammer 2, durch den Spalt zwischen Magnetscheibe 8 und der Innenwand der Reaktionskammer 2, und/oder durch die Durchgangsöffnung 8 strömt. Die Durchgangsbohrung 8 bewirkt also eine Rührung bzw. Verwirbelung der Flüssigkeit 5, wodurch sich die Flüssigkeit 5 schneller und gleichmäßiger erwärmt und die Probe P somit effizienter erhitzt wird. Zur Verstärkung des vorgenannten Rühreffekts ist es bevorzugt, wenn die Magnetscheibe 8 mehrere, also wenigstens zwei, vorzugsweise drei, besonders bevorzugt vier Durchgangsbohrungen 13 aufweist, welche vorzugsweise um die Rotationsachse der Magnetscheibe 8 gleichmäßig verteilt sind.

Der Druckbehälter 1 ist jedoch nicht auf eine derartige Rührung beschränkt. Insbesondere können auch andere Rührmittel zum Rühren der Flüssigkeit 5 verwendet werden wie beispielsweise ein auf einer Rührwelle gelagerter Rührstab oder dergleichen.

Wie weiterhin erkennbar, kann der jeweilige Probenbehälter 6 einen Rührmagneten 14 zum Rühren einer in dem Probenbehälter 6 aufgenommenen Probe P aufweisen. Der Rührmagnet 14 ist vorzugsweise ein Permanentmagnet mit Nord- Südpolung. Der Rührmagnet 14 hat vorzugsweise eine längliche Form, um somit über seine Länge die Probe P zu rühren. Der Rührmagnet 14 kann ausgebildet sein, um schräg in dem Probenbehälter 6 zu liegen. Der Rührmagnet 14 ist vorzugsweise als Rührfischchen ausgebildet. Der Rührmagnet 14 kann im Allgemeinen jedoch jede Form aufweisen, welche geeignet ist, um die Probe P zu rühren, also beispielsweise auch eine Propellerform oder dergleichen.

Der Rührmagnet 14 ist bezüglich der Magnetscheibe 8 derart vorgesehen, dass der Rührmagnet 14 durch das rotierende Magnetfeld des Elektromagneten 10 und/oder der Magnetscheibe 8 in Bewegung versetzt wird. Hierfür ist es besonders von Vorteil, wenn der Rührmagnet 14 in einem (unteren) Teil des Probenbehälters 6 vorgesehen, welcher unmittelbar gegenüber der Magnetscheibe 8 und/oder der Platte 9 vorgesehen ist, sodass das Magnetfeld der Magnetscheibe 8 gut auf den Rührmagneten 14 wirkt. Das jeweilige Magnetfeld der Magnetscheibe 8 und/oder des Elektromagneten 10 bewegt sich also relativ zum Probenbehälter 6, wodurch der Rührmagnet 14 in eine Bewegung bzw. Drehung versetzt wird, welche der Drehung des jeweiligen Magnetfelds bzw. der Magnetfelder entspricht. Durch diese Bewegung wird die Probe P folglich mittels des Rührmagneten 14 gerührt, wodurch insbesondere Proben mit hoher Viskosität bzw. vielen Feststoffanteilen effizient homogenisiert werden können.

Der Druckbehälter 1 kann zum Erwärmen bzw. Beheizen, insbesondere der Flüssigkeit 5, der Platte 9 und/oder der Proben P, jegliche Mittel zur direkten oder indirekten Abgabe von Wärme aufweisen. Bevorzugt ist, wenn der Druckbehälter 1 einen nicht näher dargestellten Mikrowellengenerator aufweist, welcher über den Mikrowelleneinkopplungsbereich 11 Mikrowellen in die Reaktionskammer 2 einkoppelt. Die generierten Mikrowellen gelangen in die Reaktionskammer 2 dabei vorzugsweise über das Magnetfeld der Magnetscheibe 8 und/oder des Elektromagneten 10, sodass das Magnetfeld mit den eingekoppelten Mikrowellen wechselwirken kann, um beispielsweise eine vorteilhafte Lenkung der Mikrowellen zu bewirken.

Der Druckbehälter 1 weist ferner einen Fluid-Einlass 20 mit einem Zuführventil 21 auf. Das Zuführventil 21 ist zwischen einer Offenstellung zum Zuführen eines Fluids in die Reaktionskammer 2 und einer Schließstellung zum Stoppen des Zuführens des Fluids verstellbar. Das Zuführventil 21 ist vorzugsweise ein elektrischbetätigbares Ventil. Die Zuführrichtung ist schematisch mit dem auf das Zuführventil 21 zeigenden Pfeil angedeutet. Das Fluid kann beispielsweise ein Spülgas sein. Denkbar ist insbesondere jedes Fluid, das wenig bis keinen Sauerstoff aufweist. Vorzugsweise ist das Fluid ein reduktives Gas, besonders bevorzugt ein Inertgas, Argon und/oder Wasserstoff aufweisendes Fluid. Besonders bevorzugt weist das Fluid 5 Vol. % oder weniger Wasserstoff auf. Letztgenanntes Fluid eignet sich in besonders vorteilhafter Weise, da es nicht brennbar ist.

Zum Zuführen des Fluids ist das Zuführventil 21 vorzugsweise mit einem nicht näher dargestellten Fluid-Reservoir wie beispielsweise einem das Fluid beinhaltenden Container oder Behältnis fluidisch verbunden. Das das Fluid aufweisende Behältnis kann in der Nähe des Druckbehälters 1 oder auch in dem Druckbehälter 1 integriert vorgesehen sein, beispielsweise in einem den Druckbehälter 1 aufnehmenden Gehäuse.

Das Zuführventil 21 ist vorzugsweise oberhalb der im Druckbehälter 1 aufgenommenen Probe P vorgesehen. Insbesondere kann das Zuführventil 21 oberhalb des Deckels 4 angeordnet sein. Vorzugsweise ist das Zuführventil 21 außerhalb der Reaktionskammer 2 und/oder des Druckbehälters 1 angeordnet, um somit eine gute Zugänglichkeit für das Zuführventil 21 bereitzustellen. Bevorzugt ist, wenn das Zuführventil 21 das Fluid über den Fluid-Einlass 20 derart in die Reaktionskammer 2 abgibt, dass das Fluid von oberhalb der Probe P bzw. von oberhalb des Probenbehälters 6 in die Reaktionskammer 2 zugeführt wird. Somit kann das Fluid besonders gut die Probe P erreichen, um mit dieser beispielsweise wechselzuwirken und/oder von dieser Sauerstoff zu entfernen. In einer besonders bevorzugten Ausführung kann außerdem vorgesehen sein, dass das Fluid in einer Richtung senkrecht zur Probe P bzw. in Richtung der Längsachse des Probenbehälter 6 der Reaktionskammer 2 zugeführt wird.

Erkennbar ist ferner, dass eine Zuführleitung 22 vorgesehen sein kann, die den Fluid-Einlass 20 wenigstens mit dem Zuführventil 21 fluidisch verbindet. Die Zuführleitung 22 verläuft hierfür vorzugsweise wenigstens teilweise außerhalb des Druckbehälters 1, um das außerhalb des Druckbehälters 1 vorgesehene Zuführventil 21 mit dem in die Reaktionskammer 2 mündenden Fluid-Einlass 20 fluidisch zu verbinden. Vorzugsweise ist die Zuführleitung 22 wenigstens teilweise integral mit dem Deckel 4 ausgebildet. Das stromaufwärts des Zuführventils 22 befindliche Ende der Zuführleitung 22 ist vorzugsweise ausgebildet, um mit dem zuvorgenannten Reservoir verbunden zu werden. Zur besonders kompakten Ausführung des Druckbehälters 1 kann die Zuführleitung 22 sich vorzugsweise nach oberhalb des Deckels 4 und anschließend nach seitlich des Druckbehälters 1 erstrecken.

Der Druckbehälter 1 kann ferner ein Rückschlagventil 23 bzw. ein Ventil, welches nur in einer Richtung eine Strömung des Fluids zulässt, aufweisen. Das Rückschlagventil 23 ist eingerichtet, die Zufuhr des Fluids über den Fluid-Einlass 20 in die Reaktionskammer 2 zu stoppen, sobald ein bestimmter Druck in der Reaktionskammer 2 erreicht ist. Hierfür ist bevorzugt, wenn das Rückschlagventil 23 stromabwärts des Zuführventils 21 und in der Zuführleitung 22 vorgesehen ist. Insbesondere kann das Rückschlagventil 21 außerhalb des Druckbehälters 1 vorgesehen sein.

Das Rückschlagventil 23 ist somit zwischen Fluid-Einlass 20 und Zuführventil 21 angeordnet, sodass der Druck der Reaktionskammer 2 auf einer Seite des Rückschlagventil 23, beispielsweise über die Zuführleitung 22, wirken kann. Das Rückschlagventil 23 weist vorzugsweise ein elastisches Element wie beispielsweise eine Feder auf, welche das Rückschlagventil 23 in eine Schließstellung spannt, in welcher das Fluid der Reaktionskammer 2 nicht zugeführt werden kann. Das heißt, wird über das Zuführventil 21 kein Fluid zugeführt oder das Fluid mit einem Druck zugeführt, welcher die Spannkraft des Zuführventils 21 nicht überwindet, so befindet sich das Rückschlagventil 23 in der Schließstellung, in der kein Fluid über den Fluid-Einlass 20 in die Reaktionskammer 2 gelangen kann. Fördert das Zuführventil 21 das Fluid in Richtung des Rückschlagventils 23 mit einem derartigen Druck zu, dass dieser die Rückstellkraft des Rückschlagventil 23 überwindet, so wird Fluid der Reaktionskammer 2 zugeführt. Übersteigt der in der Reaktionskammer 2 herrschende Druck, welcher insbesondere durch das zugeführte Fluid bedingt ist, den Druck des über das Zuführventil 21 zugeführten Fluids, so wird das Rückschlagventil 23 zurück in seine Schließstellung bewegt. Somit ist der Fluid-Einlass 20 ab einem bestimmten in der Reaktionskammer 2 herrschenden Druck bzw. ab einer bestimmten in der Reaktionskammer 2 aufgenommenen Menge an Fluid über das Rückschlagventil 23 automatisch nach außen verschlossen.

Der Druckbehälter 1 weist ferner einen Fluid-Auslass 30 mit einem Abführventil 31 auf. Das Abführventil 31 ist zwischen einer Offenstellung zum Abführen eines Fluids aus der Reaktionskammer 2 und einer Schließstellung zum Stoppen des Abführens des Fluids aus der Reaktionskammer 2 verstellbar. Das heißt, über das in der Offenstellung befindliche Abführventil 31 kann insbesondere Sauerstoff und das über das Zuführventil 21 zugeführte Fluid aus der Reaktionskammer 2 abgeführt werden.

Mit anderen Worten wird mittels des über das Zuführventil 21 zugeführten Fluids in der Reaktionskammer 2 ein Überdruck erzeugt, sodass wenigstens ein Teil des zugeführten Fluids und insbesondere Sauerstoff über den Fluid-Auslass 30 sowie das Abführventil 31 nach außerhalb der Reaktionskammer 2 und des Druckbehälters 1 abgeführt wird. Es kann außerdem vorgesehen sein, dass das Abführventil 31 ausgelegt ist oder zumindest mit entsprechenden Mittel verbunden ist, um in der Offenstellung einen Unterdruck bezüglich der Reaktionskammer 2 zu bilden, um somit insbesondere Sauerstoff aus der Reaktionskammer 2 zu saugen.

Das Abführventil 31 ist vorzugsweise oberhalb des Druckbehälters 1 bzw. oberhalb der im Druckbehälter 1 aufgenommenen Probe P vorgesehen. Besonders bevorzugt ist, wenn das Abführventil 31 außerhalb der Reaktionskammer 2 und/oder des Druckbehälters 1 vorgesehen ist, um beispielsweise einen guten Zugang zu dem Abführventil 31 zu ermöglichen. Das Abführventil 31 kann jedoch auch in anderer Weise vorgesehen sein, beispielsweise in den Deckel 4 des Druckbehälters 1 integriert sein.

Der Druckbehälter 1 kann ferner eine Abführleitung 32 aufweisen, welche den Fluidauslass 30 mit wenigstens dem Abführventil 31 fluidisch verbindet. Die Abführleitung 32 ist dabei bevorzugt derart vorgesehen, dass diese sich von dem Fluidauslass 30 bis wenigstens zu dem Abführventil 31 nach außerhalb des Druckbehälters 1 erstreckt. Die Abführleitung 32 mündet also bevorzugt von außerhalb des Druckbehälters 1 in den Fluidauslass 30. Erkennbar ist außerdem, dass der Fluidauslass 30 bzw. die Abführleitung 32 derart vorgesehen sein kann, dass Fluid in diesen in eine Richtung parallel zur Fluid-Einlassrichtung eingeführt wird. Die Abführleitung 32 kann wenigstens teilweise mit dem Druckbehälter 1, vorzugsweise mit dem Deckel 4, integral ausgebildet sein. Vorzugsweise erstreckt sich die Abführleitung 32 in einer der Zuführleitung 22 entsprechenden Weise, d. h. insbesondere von dem Fluid-Auslass 30 nach oberhalb des Druckbehälters 1 und anschließend nach seitlich des Druckbehälters 1, also von der Zuführleitung 22 weg. Somit kann der Druckbehälter kompakter ausgeführt werden.

Der Druckbehälter 1 weist ferner einen Sauerstoffsensor 33 zum Erfassen eines Sauerstoffgehalts in der Reaktionskammer 2 auf. Ist die Abführleitung 32 vorhanden, so ist der Sauerstoffsensor 33 in Fluidverbindung mit der Abführleitung 32. In dem in Figur 1 dargestellten Ausführungsbeispiel ist der Sauerstoffsensor 33 außerhalb der Reaktionskammer 2 und/oder des Druckbehälters 1 vorgesehen, um gut zugänglich zu sein, beispielsweise für Montage- und/oder Wartungszwecke. Außerdem ist erkennbar, dass der Sauerstoffsensor 33 stromabwärts von dem Abführventil 31 vorgesehen sein kann. Der Sauerstoffsensor 33 kann jedoch auch stromaufwärts des Abführventils 31 vorgesehen sein.

Der Sauerstoffsensor 33 erfasst den Sauerstoffgehalt/Sauerstoffanteil in der Reaktionskammer 2 vorzugsweise derart, dass auf Basis des Sauerstoffgehalts einer aus der Reaktionskammer 2 abgeführten Menge des Fluids auf den Sauerstoffgehalt in der Reaktionskammer 2 geschlossen wird. Es kann jedoch auch vorgesehen sein, dass der Sauerstoffsensor 33 die absolute Menge an abgeführten Sauerstoff misst und über eine Bilanzierung dann auf die absolute Menge an Sauerstoff und somit den (relativen) Sauerstoffgehalt in der Reaktionskammer 2 schließt. Alternativ kann auch vorgesehen sein, dass der Sauerstoffsensor 33 innerhalb des Druckbehälters 1 bzw. der Reaktionskammer 2 vorgesehen ist, um direkt den Sauerstoffgehalt in der Reaktionskammer 2 zu messen.

Der Druckbehälter 1 weist ferner eine nicht näher dargestellte Steuerungseinrichtung auf, welche wenigstens mit dem Zuführventil 21, dem Abführventil 32 und dem Sauerstoffsensor 33 funktional verbunden ist. Genauer gesagt wird der von dem Sauerstoffsensor 33 erfasste Wert des Sauerstoffgehalts an die Steuerungseinrichtung weitergeleitet, sodass die Steuerungseinrichtung auf Basis dieses Werts bzw. Sauerstoffgehalts wenigstens das Abführventil 21 und vorzugsweise auch das Zuführventil 21 entsprechend steuert. Erfindungsgemäß steuert die Steuerungseinrichtung das Zuführventil 21 und das Abführventil 31 auf Basis des zuvor genannten Sauerstoffgehalts derart, dass sobald ein vorbestimmter Sauerstoffgehalt unterschritten wird, das Abführventil 31 von der Offenstellung in die Schließstellung wechselt. Der vorbestimmte Sauerstoffgehalt kann beispielsweise über eine Benutzerschnittstelle oder dergleichen eingegeben, an die Steuerungseinrichtung weitergeleitet und in dieser folglich gespeichert werden. Der vorbestimmte Sauerstoffgehalt beträgt vorzugsweise so viel, dass dieser keine Veränderung an den Proben P bewirkt. Der (vorbestimmte) Sauerstoffgehalt wird vorzugsweise in Vol. % angegeben und liegt in einer bevorzugten Ausführungsform in einem Bereich von 0 bis 10 Vol. %, insbesondere in einem Bereich von 0 bis 8 Vol. %, beispielsweise 5 Vol. %. Die Erfindung ist auf die vorbezeichneten Werte(bereiche) nicht beschränkt; vielmehr können diese je nach Wunsch bzw. Anforderung an die Reaktion entsprechend festgelegt und eingestellt werden. Das heißt, solange der in der Reaktionskammer 2 vorgesehene Sauerstoffgehalt über den vorbestimmten Sauerstoffgehalt liegt, wird die Reaktionskammer 2 über das jeweils in der Offenstellung befindliche Zuführventil 21 und Abführventil 31 gespült, also insbesondere Sauerstoff aus der Reaktionskammer 2 abgeführt.

Bevorzugt ist, wenn die Steuerungseinrichtung ferner dazu eingerichtet ist, das Zuführventil 21 derart zu steuern, dass das Zuführventil 21 nach dem Wechsel des Abführventils 31 in die Schließstellung - also sobald der vorbestimmte Sauerstoffgehalt unterschritten wurde - in der Offenstellung bleibt bzw. verharrt. Somit wird die Reaktionskammer 2 mittels des über das Zuführventil 21 zugeführte Fluids unter Druck gesetzt, um insbesondere mit den Proben P zusammen zu wirken, also beispielsweise die Siedepunkt dieser Proben und vorzugsweise auch der Lösemittel der Proben zu erhöhen. Alternativ kann auch vorgesehen sein, dass die Steuerungseinrichtung derart eingerichtet ist, dass auch bzw. gleichzeitig mit dem Abführventil 31 das Zuführventil 21 in die Schließstellung wechselt, sobald der vorbestimmte Sauerstoffgehalt unterschritten wurde.

Ferner kann vorgesehen sein, dass die Steuerungseinrichtung unter zusätzlichen bzw. alternativen Voraussetzungen das Zuführventil 21 schließt. Beispielsweise kann die Steuerungseinrichtung das Zuführventil 21 derart steuern, dass dieses in die Schließstellung bewegt wird, sobald eine bestimmte Menge des zugeführten Fluids in der Reaktionskammer 2 vorhanden ist bzw. das zugeführte Fluid in der Reaktionskammer 2 einen bestimmten Druck bewirkt hat. Hierfür kann der Druckbehälter 1 einen nicht näher dargestellten Drucksensor aufweisen, welcher mit der Steuerungseinrichtung funktional verbunden ist und vorgesehen ist, den Druck innerhalb der Reaktionskammer 2 zu messen. Der so erfasste Druckwert wird dann an die Steuerungseinrichtung weitergeleitet und in der Steuerungseinrichtung mit einem in der Steuerungseinrichtung vorbestimmten bzw. abgespeicherten Druckwert verglichen. Dieser kann beispielweise ebenfalls über die zuvor beschriebene Benutzerschnittstelle oder anderweitig eingegeben, an die Steuerungseinrichtung weitergeleitet und in dieser folglich gespeichert werden. Die Steuerungseinrichtung entscheidet dann auf Basis des Vergleichs des erfassten Druckwerts mit dem vorbestimmten Druckwert, ob das Zuführventil 21 geschlossen werden soll oder nicht. Insbesondere wenn der erfasste Druckwert den vorbestimmten Druckwert überschreitet, kann die Steuerungseinrichtung entscheiden, dass das Zuführventil 21 in die Schließstellung wechselt. Alternativ oder zusätzlich kann der Druckbehälter 1 auch andere Mittel zur Erfassung des Fluidgehalts in dem Druckbehälter 1 aufweisen, um somit analog der zuvor beschriebenen Weise zu entscheiden, ob das Zuführventil 21 geschlossen werden soll oder nicht.

Die Steuerungseinrichtung kann ferner dazu eingerichtet sein, dass nach Beenden der Druckreaktionen in der Reaktionskammer 2 die Steuerungseinrichtung wenigstens das Abführventil 31 betätigt, sodass dieses in die Offenstellung wechselt. Über den in der Reaktionskammer 2 herrschenden Druck kann/können somit über das Abführventil 31 das in der Reaktionskammer 2 vorhandene Fluid und vorzugsweise auch während der Druckreaktionen entstandene Gase bzw. Fluide aus der Reaktionskammer 2 abgeführt werden. Alternativ oder zusätzlich kann die Steuerungseinrichtung auch eingerichtet sein, nach Beenden der Druckreaktion das Zuführventil 21 zu betätigen, sodass dieses in die Offenstellung wechselt. Somit können beispielsweise über eine weitere Spülung die in der Reaktionskammer 2 vorhandenen Fluide, also insbesondere das zuvor zugeführte Fluid und vorzugsweise auch die während der Druckreaktion entstandenen Gase, besonders schnell über das Abführventil 31 nach außerhalb der Reaktionskammer 2 abgeführt werden.

In Figur 1 ist außerdem ein Druckluftventil 40 erkennbar, welches vorgesehen sein kann, um mittels über das Druckluftventil 40 zugeführte (komprimierte) Druckluft die Reaktionskammer 2 bezüglich des Druckbehälters 1 anzuheben. Dies kann beispielsweise erfolgen, indem die über das Druckluftventil 40 zugeführte Druckluft über einen Drucklufteinlass 41 in einem zwischen Reaktionskammer 2 und Druckbehälter 1 vorgesehenen Raum 42 gefördert wird. In dem Raum 42 wird somit über die Druckluft ein Druck aufbaut, welcher eine Kraft unter anderem auf die Reaktionskammer 2 bewirkt. Ist diese Kraft größer ist als die Gewichtskraft der Reaktionskammer 2 und der darin aufgenommenen Komponenten bzw. Proben P, so vergrößert sich das Volumen des Raums und die Reaktionskammer 2 wird folglich bezüglich des Druckbehälters 1 angehoben. Wie in Figur 1 beispielhaft dargestellt, kann der Raum 42 in einem nicht angehobenen Zustand der Reaktionskammer 2 durch einen unteren Bereich der Reaktionskammer 2, beispielsweise durch einen angefasten Boden der Reaktionskammer 2, gebildet sein. Das heißt, der in seiner Größe variable Raum 42 wird vorzugsweise durch den innenseitigen Bodenbereich des Druckbehälters 1 und den außenseitigen Bodenbereich der Reaktionskammer 2 gebildet. Mittels einer solchen Druckluftzufuhr kann folglich die Reaktionskammer 2 in eine Richtung nach außerhalb, also insbesondere durch die Öffnung des Druckbehälters 1 durch, gedrückt werden, um somit beispielsweise die Proben P aus der Reaktionskammer 2 einfach zu entnehmen.

Das Druckluftventil 40 ist ferner mit der Steuereinrichtung funktional verbunden, sodass die Steuereinrichtung das Druckluftventil 41 zum Anheben der Reaktionskammer 2 auf Basis eines (automatisch erfassten) Betriebsparameters automatisch betätigt. Der Betriebsparameter kann beispielsweise das Reaktionsende oder sonstige für die Reaktion repräsentative Parameter sein (bspw. Erreichen eines kritischen Fluidgehalts) sein, welche automatisch mittels entsprechender Sensoren erfasst und/oder von einem Benutzer eingeleitet werden können. Der Betriebsparameter kann auch repräsentativ für einen Zustand des Druckbehälters bzw. der Reaktionskammern sein, in welchem der Druckbehälter bzw. die Reaktionskammer gewartet und/oder gepflegt werden sollte/muss. Anschließend an die Erfassung des entsprechenden Betriebsparameters wird die Reaktionskammer 2 in der wie zuvor beschriebenen Weise angehoben. Ein Bediener des Druckbehälters 1 muss somit nichts weiteres unternehmen, damit die Reaktionskammer 2 (direkt) anschließend an die Erfassung des entsprechenden Betriebsparameters angehoben wird.

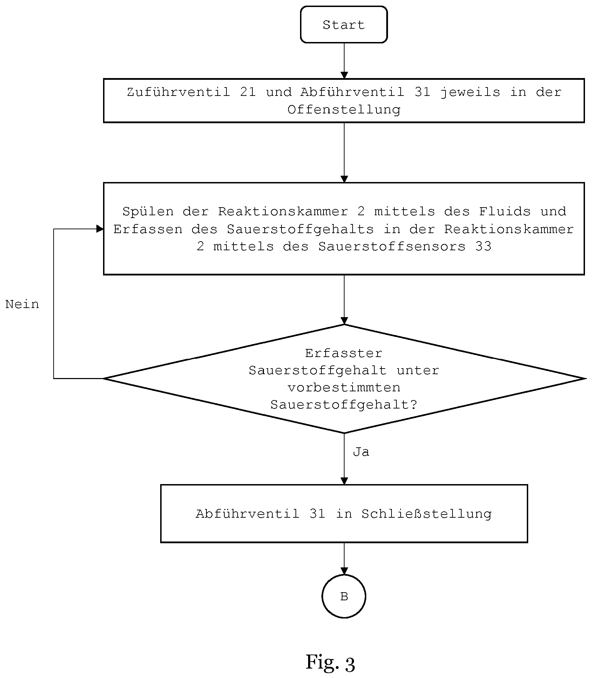

Im Folgenden soll insbesondere mit Bezug zu den Figuren 3 bis 5 noch ein beispielhaftes Verfahren zur Durchführung einer Spülung sowohl Druckreaktionen mittels des Druckbehälters 1 beschrieben werden.

Wie in Figur 3 dargestellt, befinden sich zu Beginn sowohl das Zuführventil 21 als auch das Abführventil 31 jeweils in der Offenstellung. Durch Zuführung des Fluids über das Zuführventil 21 und den Fluid-Einlass 20 sowie Abführen des Fluids über das Abführventil 31 und den Fluid-Auslass 30 wird mittels des Fluids die Reaktionskammer 2 gespült. Gleichzeitig wird mittels des Sauerstoffsensors 33 der Sauerstoffgehalt in der Reaktionskammer 2 gemessen/erfasst. Sobald der so erfasste Sauerstoffgehalt einen vorbestimmten Sauerstoffgehalt unterschreitet, wird wenigstens das Abführventil 31 in die Schließstellung bewegt. In einem anderen Ausführungsbeispiel wird gleichzeitig auch das Zuführventil 21 geschlossen. Wird der vorbestimmte Sauerstoffgehalt nicht unterschritten, so wird der zuvor beschriebene Spülvorgang fortgesetzt, bis der Sauerstoffgehalt in der Reaktionskammer 2 den vorbestimmten Sauerstoffgehalt unterschreitet.

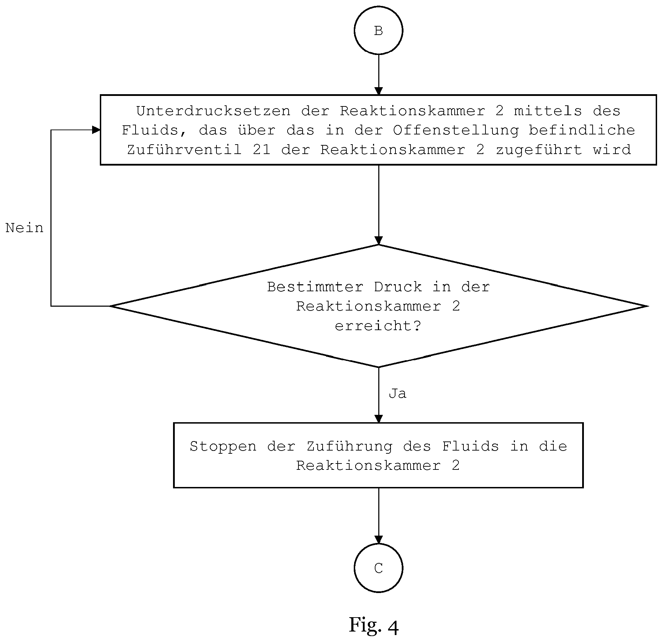

Figur 4 zeigt die bevorzugte Fortsetzung des Verfahrens, in der das Zuführventil 21 (zunächst) in der Offenstellung verharrt, wenn der vorbestimmte Sauerstoffgehalt unterschritten wurde. Da sich nun das Abführventil 31 in der Schließstellung befindet, kann weiterhin über das Zuführventil 21 das Fluid der Reaktionskammer 2 zugeführt werden. Dies erfolgt vorzugsweise so lange, bis ein vorbestimmter Druck in der Reaktionskammer 2 erreicht ist und/oder eine bestimmte Menge des Fluids in der Reaktionskammer 2 vorhanden ist. Entsprechende Sensoren können hierfür beispielsweise in der Reaktionskammer 2 vorgesehen sein, um den in der Reaktionskammer 2 herrschenden Druck und/oder die Menge des Fluids zu messen. Wenn der so erfasste Druck und/oder die so erfasste Menge des Fluids einen entsprechend bestimmten Wert überschreitet, wechselt das Zuführventil 21 in die Schließstellung. Dieser Prozess des Stoppens des Zuführens des Fluids wegen zu hohem Druck bzw. hinreichender Menge an Fluid in der Reaktionskammer 2 kann auch alternativ oder zusätzlich mittels des wie oben beschriebenen Rückschlagventils 23 eingeleitet werden.

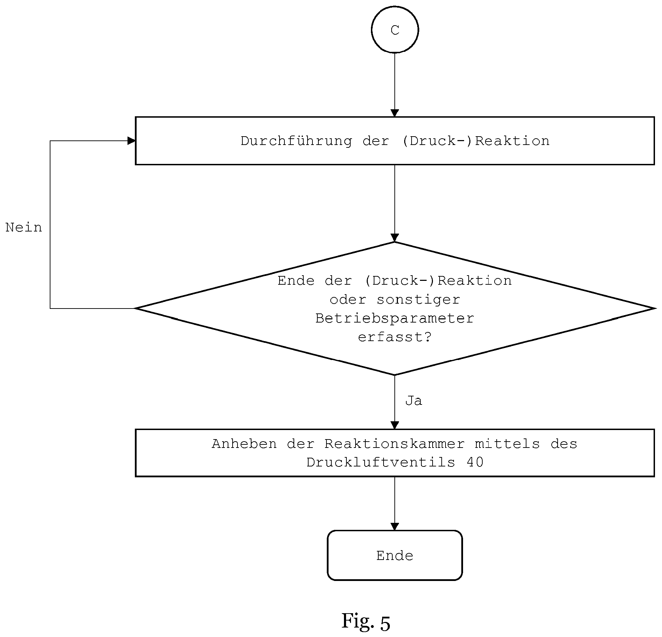

Wie in Figur 5 dargestellt, kann die Steuerungseinrichtung anschließend entsprechende Mittel ansteuern, also insbesondere den Mikrowellengenerator und/oder die Elektromagneten 10 zum Rühren der Flüssigkeit 5 mittels der Magnetscheibe 8, damit die Druckreaktion ablaufen kann. Die Druckreaktionen läuft vorzugsweise so lange, bis der Nutzer des Druckbehälters 1 dies wünscht und/oder bis bestimmte Betriebsparameter das Reaktionsende (automatisch) erfassen. Auf Basis des Reaktionsendes bzw. eines anderen automatisch erfassten Betriebsparameters (beispielsweise Wartung oder Pflege des Druckbehälters oder der Reaktionskammer) kann sodann die Steuerungseinrichtung das Druckluftventil 40 ansteuern, damit wie in der zuvor beschriebenen Weise die Reaktionskammer 2 angehoben wird. Anschließend kann somit der Nutzer des Druckbehälters 1 beispielsweise die Proben P aus der Reaktionskammer 2 entnehmen.

Im Ergebnis wird somit ein Druckbehälter 1 bereitgestellt, welcher neben einer effizienteren Spülung auch eine einfachere Bedienung ermöglicht, indem insbesondere die Sauerstoffabfuhr bis zur Erreichung des gewünschten Sauerstoffgehalts aus der Reaktionskammer 2 automatisch erfolgt. Sauerstoff kann somit aus der Reaktionskammer 2 entfernt werden, damit dieser die in der Reaktionskammer 2 vorgesehenen Proben P nicht chemisch verändert oder sogar zerstört. Folglich kann die Druckreaktion an chemisch unveränderten bzw. an den ursprünglichen Proben durchgeführt werden, sodass die anschließende Analyse der Reaktionsprodukte wesentlich verbessert ist, d.h. insbesondere aussagekräftigere Analyseergebnisse bereitgestellt werden können.

Die Erfindung ist dabei nicht auf die zuvor beschriebenen Merkmale beschränkt. Insbesondere lassen sich alle zuvor beschriebenen Merkmale in beliebiger Weise miteinander kombinieren.

## Patentansprüche

1. Druckbehälter (1), aufweisend
eine Reaktionskammer (2) als Druckraum zum Auslösen und/oder Fördern chemischer und/oder physikalischer Druckreaktionen von in der Reaktionskammer (2) aufgenommenen Proben (P),
einen Fluid-Einlass (20) mit einem Zuführventil (21), welches zwischen einer Offenstellung zum Zuführen eines Fluids in die Reaktionskammer (2) und einer Schließstellung zum Stoppen des Zuführens des Fluids verstellbar ist,
einen Fluid-Auslass (30) mit einem Abführventil (31), welches zwischen einer Offenstellung zum Abführen eines Fluids aus der Reaktionskammer (2) und einer Schließstellung zum Stoppen des Abführens des Fluids aus der Reaktionskammer (2) verstellbar ist,
einen Sauerstoffsensor (33) zum Erfassen eines Sauerstoffgehalts in der Reaktionskammer (2), und
eine Steuerungseinrichtung, welche eingerichtet ist, das Zuführventil (21) und das Abführventil (31) auf Basis des von dem Sauerstoffsensor (33) erfassten Sauerstoffgehalts derart zu steuern, dass über das in der Offenstellung befindliche Zuführ- und Abführventil (21, 31) die Reaktionskammer (2) gespült wird und wenigstens das Abführventil (31) von der Offenstellung in die Schließstellung wechselt, sobald ein vorbestimmter Sauerstoffgehalt unterschritten wird.

2. Druckbehälter (1) nach Anspruch 1, wobei die Steuerungseinrichtung eingerichtet ist, das Zuführventil (21) derart zu steuern, dass nach dem Wechsel des Abführventils (31) in die Schließstellung das Zuführventil (21) in der Offenstellung bleibt, sodass die Reaktionskammer (2) mittels des über das Zuführventil (21) zugeführte Fluids unter Druck gesetzt wird.

3. Druckbehälter (1) nach Anspruch 1 oder 2, ferner aufweisend ein Rückschlagventil (23), welches eingerichtet ist, die Zufuhr des Fluids über das Zuführventil (21) in die Reaktionskammer (2) zu stoppen, sobald ein bestimmter Druck in der Reaktionskammer (2) erreicht ist.

4. Druckbehälter (1) nach einem der vorhergehenden Ansprüche, wobei das Zuführventil (21) und das Abführventil (31) oberhalb der im Druckbehälter (1) aufgenommenen Probe (P) vorgesehen sind.

5. Druckbehälter (1) nach einem der vorhergehenden Ansprüche, ferner aufweisend eine mit dem Zuführventil (21) und dem Fluid-Einlass (20) verbundene Zuführleitung (22) zum Zuführen des Spülgases in die Reaktionskammer (2), wobei bevorzugt die Zuführleitung (22) von außerhalb des Druckbehälters (1) in den Fluid-Einlass (20) mündet.

6. Druckbehälter (1) nach einem der vorhergehenden Ansprüche, ferner aufweisend eine mit dem Fluid-Auslass (30) und dem Abführventil (31) verbundene Abführleitung (32) zum Abführen des Sauerstoffs aus der Reaktionskammer (2), wobei bevorzugt die Abführleitung (32) von außerhalb des Druckbehälters (1) in den Fluid-Auslass (30) mündet.

7. Druckbehälter (1) nach Anspruch 6, wobei der Sauerstoffsensor (33) zum Erfassen des Sauerstoffgehalts stromabwärts von dem Abführventil (31) mit der Abführleitung (32) verbunden ist.

8. Druckbehälter (1) nach einem der vorhergehenden Ansprüche, wobei das Abführventil (31) ein Hochdruckventil ist.

9. Druckbehälter (1) nach einem der vorhergehenden Ansprüche, ferner aufweisend ein Druckluftventil (40) zum Anheben wenigstens der Reaktionskammer (2) bezüglich des Druckbehälters (1) mittels über das Druckluftventil (40) in den Druckbehälter (1) zugeführte Druckluft, wobei die Steuereinrichtung ferner dazu eingerichtet ist, das Druckluftventil (40) zum Anheben der Reaktionskammer (2) auf Basis eines von der Steuereinrichtung (automatisch) erfassten Betriebsparameters, beispielsweise Reaktionsende, automatisch zu betätigen.

10. Verfahren zum Spülen einer Reaktionskammer mit einem Druckbehälter (1) nach einem der Ansprüche 1 bis 9, aufweisend die folgenden Schritte:
Spülen der Reaktionskammer (2) über den Fluid-Einlass (20) und den Fluid-Auslass (30) sowie das offene Zuführ- und Abführventil (21,31) mittels eines Fluids,
Erfassen des Sauerstoffgehalts in der Reaktionskammer mit dem Sauerstoffsensor (33),
Schließen wenigstens des Abführventils (31), sobald der erfasste Sauerstoffgehalt einen vorbestimmten Sauerstoffgehalt unterschreitet.

11. Verfahren nach Anspruch 10, wobei das Fluid ein Spülgas ist.

12. Verfahren nach Anspruch 10 oder 11, wobei das Fluid ein reduktives Gas ist.

13. Verfahren nach einem der Ansprüche 10 bis 12, wobei das Fluid ein Inertgas ist.

14. Verfahren nach einem der Ansprüche 10 bis 13, wobei das Fluid Argon und/oder Wasserstoff aufweist.

15. Verfahren nach einem der Ansprüche 10 bis 14, wobei das Fluid 5 Vol. % Wasserstoff aufweist.

## Claims

1. Pressurized container (1) comprising:
a reaction chamber (2) as a pressure chamber for initiating and/or promoting chemical and/or physical pressure reactions of samples (P) accommodated within the reaction chamber (2),
a fluid inlet (20) having an supply valve (21) adjustable between an open position for supplying fluid into the reaction chamber (2) and a closed position for stopping the supply of the fluid,
a fluid outlet (30) having a discharge valve (31) adjustable between an open position for discharging fluid from the reaction chamber (2) and a closed position for stopping the discharge of the fluid from the reaction chamber (2),
an oxygen sensor (33) for detecting an oxygen content within the reaction chamber (2), and
a control means adapted to control the supply valve (21) and the discharge valve (31) based on the oxygen content detected by the oxygen sensor (33) such that to the reaction chamber (2) will be rinsed through the supply and discharge valves (21,31) being in the open position and at least the discharge valve (31) will change from the open position to the closed position as soon as the oxygen content will fall below a predetermined value.

2. Pressurized container (1) according to claim 1, wherein the control means is adapted to control the supply valve (21) so as to remain in the open position after the change of the discharge valve (31) to the closed position so that the reaction chamber (2) will be pressurized by means of the fluid supplied through the supply valve (21).

3. Pressurized container (1) according to claim 1 or 2, further comprising a check valve (23) adapted to stop the supply of the fluid into the reaction chamber (2) through the supply valve (21) as soon as a specific pressure within the reaction chamber (2) will be reached.

4. Pressurized container (1) according to any of the preceding claims, wherein the supply valve (21) and the discharge valve (31) are provided above the sample (P) accommodated within the pressurized container (1).

5. Pressurized container (1) according to any of the preceding claims, further comprising a supply pipe (22) connected to the supply valve (21) and the fluid inlet (20) for supplying rinsing gas into the reaction chamber (2), wherein the supply pipe (22) preferentially opens out into the fluid inlet (20) from outside the pressurized container (1).

6. Pressurized container (1) according to any of the preceding claims, further comprising a discharge pipe (32) connected with the fluid outlet (30) and the discharge valve (31) for discharging the oxygen from the reaction chamber (2), wherein the discharge pipe (32) preferentially opens out into the fluid outlet (30) from outside the pressurized container (1).

7. Pressurized container (1) according to claim 6, wherein the oxygen sensor (33) for detecting the oxygen content is connected to the discharge pipe (32) downstream of the discharge valve (31).

8. Pressurized container (1) according to any of the preceding claims, wherein the discharge valve (31) is a high pressure valve.

9. Pressurized container (1) according to any of the preceding claims, further comprising a compressed-air valve (40) for raising at least the reaction chamber (2) relative to the pressurized container (1) by means of pressurized air supplied to the pressurized container (1) through the compressed-air valve (4), wherein the control means being further adapted to actuate the compressed-air valve (40) for raising the reaction chamber (2) automatically based on an operating parameter, for example the end of the reaction, detected (automatically) by the control means.

10. Method for rinsing a reaction chamber with a pressurized container (1) according to any of claims 1 to 9, comprising the steps:
rinsing the reaction chamber (2) through the fluid inlet (20) and the fluid outlet (30) as well as the open supply and discharge valves (21, 31) by means of a fluid,
detecting the oxygen content within the reaction chamber using the oxygen sensor (33), closing at least the discharge valve (31) as soon as the detected oxygen level falls below a predetermined oxygen content.

11. Method according to claim 10, wherein the fluid is a rinsing gas.

12. Method according to claim 10 or 11, wherein the fluid is a reductive gas.

13. Method according to any of claims 10 to 12, wherein the fluid is an inert gas.

14. Method according to any of claims 10 to 13, wherein the fluid comprises argon and/or hydrogen.

15. Method according to any of claims 10 to 14, wherein the fluid comprises 5% by volume hydrogen.

## Revendications

1. Réservoir sous pression (1), présentant une chambre de réaction (2) comme espace sous pression pour déclencher et / ou stimuler des réactions sous pressions chimiques et / ou physiques d'échantillons (P) logés dans la chambre de réaction (2),
une entrée de fluide (20) avec une soupape d'alimentation (21), laquelle est réglable entre une position ouverte pour alimenter un fluide dans la chambre de réaction (2) et une position fermée pour arrêter l'alimentation du fluide,
une sortie de fluide (30) avec une soupape d'évacuation (31), laquelle est réglable entre une position ouverte pour évacuer un fluide de la chambre de réaction (2) et une position fermée pour arrêter l'évacuation du fluide de la chambre de réaction (2), un capteur d'oxygène (33) pour détecter une teneur en oxygène dans la chambre de réaction (2), et
un dispositif de commande, lequel est agencé, pour commander la soupape d'alimentation (21) et la soupape d'évacuation (31) sur la base de la teneur en oxygène détectée par le capteur d'oxygène (33), de manière telle que la chambre de réaction (2) est rincée par l'intermédiaire de la soupape d'alimentation et d'évacuation (21, 31) se trouvant en position ouverte et au moins la soupape d'évacuation (31) passe de la position ouverte à la position fermée dès qu'une teneur prédéterminée en oxygène n'est pas atteinte.

2. Réservoir sous pression (1) selon la revendication 1, dans lequel le dispositif de commande est agencé pour commander la soupape d'alimentation (21) de telle sorte qu'après le passage de la soupape d'évacuation (31) dans la position fermée, la soupape d'alimentation (21) reste dans la position ouverte, si bien que la chambre de réaction (2) est mise sous pression au moyen du fluide alimenté par l'intermédiaire de la soupape d'alimentation (21).

3. Réservoir sous pression (1) selon la revendication 1 ou 2, présentant, en outre, une soupape de non-retour (23), laquelle est agencée pour arrêter l'alimentation du fluide dans la chambre de réaction (2) par l'intermédiaire de la soupape d'alimentation (21) dès qu'une certaine pression est atteinte dans la chambre de réaction (2).

4. Réservoir sous pression (1) selon l'une des revendications précédentes, dans lequel la soupape d'alimentation (21) et la soupape d'évacuation (31) sont prévues au-dessus de l'échantillon (P) logé dans le réservoir sous pression (1).

5. Réservoir sous pression (1) selon l'une des revendications précédentes, présentant, en outre, une conduite d'alimentation (22) reliée à la soupape d'alimentation (21) et à l'entrée de fluide (20) pour alimenter le gaz de rinçage dans la chambre de réaction (2), dans lequel, de préférence, la conduite d'alimentation (22) débouche, de l'extérieur du réservoir sous pression (1), dans l'entrée de fluide (20).

6. Réservoir sous pression (1) selon l'une des revendications précédentes, présentant, en outre, une conduite d'évacuation (32) reliée à la sortie de fluide (30) et à la soupape d'évacuation (31) pour évacuer l'oxygène de la chambre de réaction (2), dans lequel, de préférence, la conduite d'évacuation (32) débouche, de l'extérieur du réservoir sous pression (1), dans la sortie de fluide (30).

7. Réservoir sous pression (1) selon la revendication 6, dans lequel le capteur d'oxygène (33) destiné à détecter la teneur en oxygène en aval de la soupape d'évacuation (31), est relié à la conduite d'évacuation (32).

8. Réservoir sous pression (1) selon l'une des revendications précédentes, dans lequel la soupape d'évacuation (31) est une soupape haute pression.

9. Réservoir sous pression (1) selon l'une des revendications précédentes, présentant, en outre, une valve pneumatique (40) pour soulever au moins la chambre de réaction (2) par rapport au réservoir sous pression (1) au moyen de l'air comprimé alimenté dans le réservoir sous pression (1) par le clapet pneumatique (40), dans lequel le dispositif de commande est, en outre, agencé pour actionner automatiquement le clapet pneumatique (40) afin de soulever la chambre de réaction (2) sur la base d'un paramètre opératoire, par exemple, fin de réaction, détecté (automatiquement) par le dispositif de commande.

10. Procédé de rinçage d'une chambre de réaction avec un réservoir sous pression (1) selon l'une des revendications 1 à 9, présentant les étapes suivantes :
rinçage de la chambre de réaction (2) à l'aide d'un fluide par l'intermédiaire de l'entrée de fluide (20) et de la sortie de fluide (30) ainsi que de la soupape d'alimentation et d'évacuation ouverte (21, 31),
détection de la teneur en oxygène dans la chambre de réaction avec le capteur d'oxygène (33),
fermeture au moins de la soupape d'évacuation (31) dès que la teneur en oxygène détectée est inférieure à une teneur en oxygène prédéterminée.

11. Procédé selon la revendication 10, dans lequel le fluide est un gaz de rinçage.

12. Procédé selon la revendication 10 ou 11, dans lequel le fluide est un gaz réducteur.

13. Procédé selon l'une des revendications 10 à 12, dans lequel le fluide est un gaz inerte.

14. Procédé selon l'une des revendications 10 à 13, dans lequel le fluide présente de l'argon et / ou de l'hydrogène.

15. Procédé selon l'une des revendications 10 à 14, dans lequel le fluide présente 5 % d'hydrogène en volume.
